# EUROPÄISCHE PATENTANMELDUNG

(11) **EP 0 895 888 A2**
(43) Veröffentlichungstag der Anmeldung: **10.02.1999**
(21) Anmeldenummer: 98112196.5
(22) Anmeldetag: 01.07.1998
(51) Int. Cl.: B60J 7/22

(54) **Windabweiser eines Fahrzeuges, insbesondere eines Personenkraftwagens**

(30) Priorität: 05.08.1997 DE 19733871
(71) Anmelder: Bayerische Motoren Werke Aktiengesellschaft, 80788 München (DE)
(72) Erfinder: Minatti, Johann, 80935 München (DE); Clausen-Schaumann, Andreas, 82347 Bernried (DE)

(57) **Zusammenfassung**

Windabweiser für eine mittels eines bewegbaren Daches (6) abdeckbare Dachöffnung eines Personenkraftwagens, der durch ein Halteelement in abgesenkter Schließstellung gehalten und bei Entfernen des Halteelementes durch ein Kraftspeicherelement (4) in eine von einem Anschlagelement begrenzte Ausstellposition (II,III) ausgeschwenkt wird, wobei das Anschlagelement durch einen Fahrzeuginsassen verstellbar ist, um den Windabweiser-Ausstellwinkel individuell zu begrenzen. Vorgesehen ist ein an der Unterseite des Windabweisers gelenkig angebundener Stellhebel, der mit Erreichen eines gewissen Windabweiser-Ausstellwinkels (α) am sich letztendlich an der Fahrzeug-Karosserie abstützenden verstellbaren Anschlagelement (11) anliegt. Dieses Anschlagelement (11) ist in einem Gewindegang geführt, der aus der Innenwand einer koaxial zum Stellhebel angeordneten Zylinderhülse herausgearbeitet ist. Dabei umgibt das verstellbare Anschlagelement (11) den Stellhebel ringförmig und ist gegenüber diesem in Richtung der Zylinderhülsenachse längsverschiebbar, jedoch gegen Verdrehen gesichert. Das freie Ende des Stellhebels (7) weist einen Bund auf, der mit dem Anschlagelement in Kontakt kommen kann, und das Kraftspeicherelement stützt sich am Stellhebel und am Boden der Zylinderhülse ab.

## Beschreibung

Die Erfindung betrifft einen Windabweiser für eine mittels eines bewegbaren Daches abdeckbare Dachöffnung eines Fahrzeuges, insbesondere eines Personenkraftwagens, der am vorderen Dachrahmen befestigt durch ein Halteelement in abgesenkter Schließstellung gehalten und bei Entfernen des Halteelementes durch ein Kraftspeicherelement in eine von einem Anschlagelement begrenzte Ausstellposition ausgeschwenkt wird.

Üblicherweise sind für den Windabweiser bspw. an einem FahrzeugSchiebedach lediglich zwei Positionen vorgesehen. Die eine Position ist die Ruheposition, in welcher das Schiebedach geschlossen ist und die zweite Position ist die ausgestellte bzw. vollständig ausgeschwenkte Position, die der Windabweiser nach einem Öffnen des Schiebedachdeckels einnimmt.

In bestimmten Fahrgeschwindigkeitsbereichen kann sich bei bestimmten Öffnungspositionen eines Fahrzeug-Schiebedachdeckels ein unangenehmes Geräuschniveau im Fahrzeug einstellen. Bei relativ niedrigen Fahrzeug-Geschwindigkeiten können bei geöffnetem Schiebedach Wummergeräusche auftreten, während sich bei höheren Geschwindigkeiten unangenehme Pfeif- oder Zischgeräusche einstellen können, die in Abhängigkeit von der Öffnungsstellung des Schiebedaches partiell auch durch den Windabweiser verursacht werden.

Eine mögliche Abhilfemaßnahme für diese geschilderte Problematik ist in der nicht vorveröffentlichten deutschen Patentanmeldung 197 01 479 beschrieben, wonach die Austellbewegung des Windabweisers durch eine verstellbare Steuerkurve, entlang welcher ein mit dem Windabweiser verbundenes Eingriffsteil geführt ist, steuerbar ist.
Eine weitere mögliche Abhilfemaßnahme für die oben geschilderte Problematik ist in der ebenfalls nicht vorveröffentlichten deutschen Patentanmeldung 197 14 492 beschrieben, wonach ein unterschiedlich positionierbarer, bei geschlossenem Schiebedach-Deckel vom Schwenkmechanismus losgelöster Mitnehmer vorgesehen ist, der bei zumindest teilweise geöffnetem Schiehedach-Deckel mit dem Schwenkmechanismus in Eingriff kommt und danach positionsabhängig den Windabweiser in unterschiedliche Zwischenpositionen bringt.

Noch eine weitere und insbesondere einfache Abhilfemaßnahme für die oben geschilderte Problematik aufzuzeigen, ist Aufgabe der vorliegenden Erfindung.
Die Lösung dieser Aufgabe ist dadurch gekennzeichnet, daß das Anschlagelement, welches die Ausstellposition bzw. den Ausstellwinkel des Windabweisers begrenzt, durch einen Fahrzeuginsassen verstellbar ist, um den Windabweiser-Ausstellwinkel individuell zu begrenzen. Vorteilhafte Aus- und Weiterbildungen sind Inhalt der Unteransprüche.

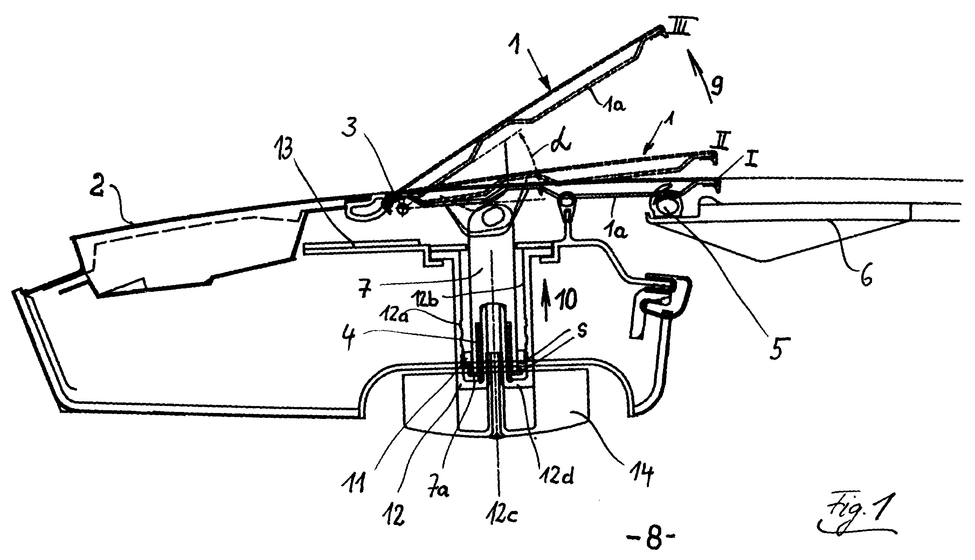

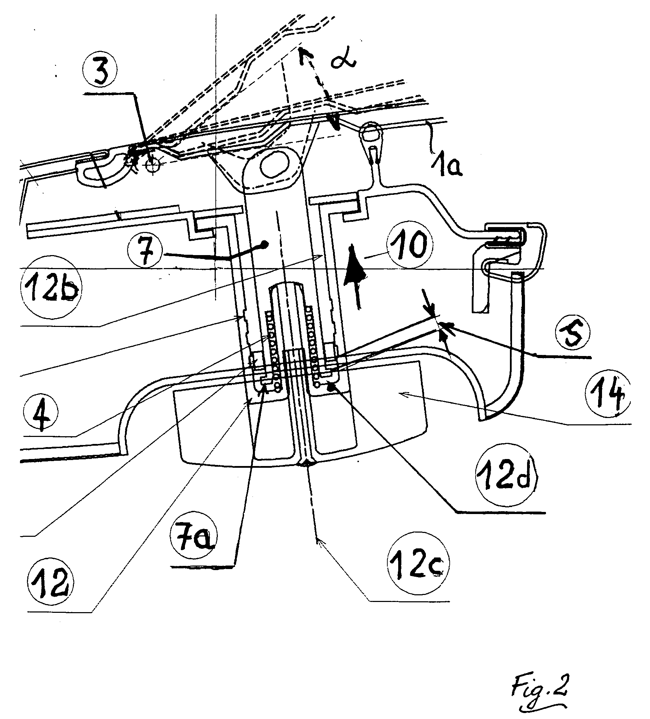

Erfindungsgemäß kann der sogenannte Ausstellwinkel des Windabweisers auf einfache Weise dadurch geändert werden, daß das Anschlagelement, welches diesen Ausstellwinkel begrenzt und somit die Ausstellposition des Windabweisers definiert, von einem Fahrseuginsassen verstellt wird. Realisierbar ist dies durch eine Vielzahl von konstruktiven Lösungen, eine besonders vorteilhafte Variante ist in den Unteransprüchen angegeben und wird im folgenden anhand eines bevorzugten Ausführungsbeispieles näher erläutert, wobei in der beigefügten **Figur 1** ein Teil-Längsschnitt durch den vorderen Fahrzeug-Dachrahmen inklusive des dort vorgesehenen Windabweisers mit der erfindungsgemäßen Betätigungsvorrichtung dargestellt ist, während **Figur 2** eine Ausschittsvergrößerung von Figur 1 zeigt, und zwar im wesentlichen den Stellhebel mit Zylinderhülse und Hand-Drehgriff.

Mit der Bezugsziffer 1 ist der Windabweiser bezeichnet, der auf nicht dargestellte Weise schwenkbar am vorderen Dachrahmen 2 des Personenkraftwagens angelenkt ist. Dargestellt ist der Windabweiser 1 in drei verschiedenen Positionen, nämlich in durchgezogenen Linien in der vollständig abgesenkten, geschlossenen Position I, während die Positionen II und III den Windabweiser 1 in gestrichelten Linien in unterschiedlichen Ausstellpositionen zeigen. Die Positionen II und III unterscheiden sich somit durch den sogenannten Ausstellwinkel α. Ausgehend von der Position I kann der Windabweiser 1 um eine vorne liegende Schwenkachse 3 unter Einfluß eines als Schraubendruckfeder ausgebildeten Kraftspeicherelementes 4 in die Positionen II, III verschwenkt werden, wenn ein nicht dargestelltes Halteelement, welches den Windabweiser 1 in seiner geschlossenen Position I hält, entfernt wird.

Im übrigen liegt der an seiner Unterseite 1a mit einem Dichtelement 5 versehene Windabweiser 1 in seiner geschlossenen Position I auf dem freien Ende des hier nicht näher erläuterten und auch nicht ausführlich dargestellten, bewegbaren Daches 6 auf.

Ebenfalls an der Unterseite 1a, jedoch näher an der Schwenkachse 3 als das Dichtelement 5 ist am Windabweiser 1 ein Stellhebel 7 gelenkig angebunden. An seinem freien Ende ist dieser sich in Richtung des Fahrzeuginnenraumes 8 erstreckende Stellhebel 7 mit einem Bund 7a versehen. Bei einer Ausstellbewegung des Windabweisers 1 gemäß Pfeilrichtung 9 wird somit der Stellhebel 7 gemäß Pfeilrichtung 10 "nach oben" bewegt und kommt schließlich mit seinem Bund 7a an einem Anschlagelement 11 zum Anliegen. Hierdurch wird die Ausstellposition, d. h. der maximal erreichbare Ausstellwinkel α des Windabweisers begrenzt.

Nun ist die Position dieses Anschlagelementes 11 durch einen sich im Fahrzeug-Innenraum 8 befindenden Fahrzeuginsassen veränderbar, d. h. dieses Anschlagelement 11 ist verstellbar, wodurch der Fahrzeuginsasse die Möglichkeit hat, den Windabweiser-Ausstellwinkel α individuell zu bestimmen bzw. zu begrenzen. Verstellt wird dieses Anschlagelement 11 dabei durch Verschieben in bzw. gegen Pfeilrichtung 10, so daß der freie Weg s, den der Stellhebel 7 zurücklegen kann, bis er mit seinem Bund 7a am Anschlagelement 11 anliegt, variierbar ist.

Ein Verstellen des Anschlagelementes 11 geschieht wie folgt:
Wie ersichtlich ist das Anschlagelement 11 in einem Gewindegang 12a geführt, der aus der Innenwand 12b einer koaxial zum Stellhebel 7 angeordneten Zylinderhülse 12 herausgearbeitet ist. Diese Zylinderhülse 12 ist dabei um ihre Zylinderhülsenachse 12c, die mit der Längsachse des Stellhebels 7 zusammenfällt, verdrehbar gelagert, und zwar an einem mit dem Dachrahmen 2 der Fahrzeugkarosserie verbundenen Trägerteil 13.
Andererseits ist das verstellbare Anschlagelement 11 nicht nur im Gewindegang 12a der Zylinderhülse 12 geführt, sondern umgibt zusätzlich den Stellhebel 7 ringförmig derart, daß das Anschlagelement 11 zwar gegenüber dem Stellhebel 7 in Richtung der Zylinderhülsenachse 12c längsverschiebbar, jedoch gegen Verdrehen gesichert ist. Diese Verdrehsicherung kann dabei auf einfache, nicht gezeigte Weise durch geeignete Formgebung erfolgen. Beispielsweise kann der innere Querschnitt des Anschlagelementes 11, in welchem der beispielsweise im Querschnitt rechteckige Stellhebel dieses Anschlagelement 11 durchtrennt, angepaßt rechteckig geformt sein.

Wird nun die Zylinderhülse 12 um ihre Achse 12c verdreht, so wird das Anschlagelement 11 aufgrund seiner Verdrehsicherung im Gewindegang 12a in bzw. gegen Pfeilrichtung 10 nach oben oder unten bewegt.
Wie bereits erläutert, wird hierdurch der freie Weg s, den der Stellhebel 7 beim Ausstellen des Windabweisers 1 zurücklegen kann, verändert, so daß der Ausstellwinkel α des Windabweisers 1 dadurch ebenfalls verändert wird. Neben den bereits erwähnten Vorteilen zeichnet sich der erfindungsgemäße Windabweiser somit auch durch verbesserte Sicherheit gegenüber einem Einbruch in den Personenkraftwagen aus, da nunmehr der Personenkraftwagen mit geringfügig ausgestelltem Windabweiser sowie teilweise geöffnetem Dach abgestellt und verlassen werden kann, jegliches Eindringen von außen in den ansonsten abgeschlossenen Personenkraftwagen aufgrund des geringen Ausstellwinkels des Windabweisers jedoch verhindert wird.

Im Sinne einer besonders kompakten, vorteilhaften Anordnung ist wie ersichtlich das als Schraubendurckfeder ausgebildete Kraftspeicherelement 4 koaxial zur Zylinderhülse 12 sowie zum Stellhebel 7 innerhalb desselben geführt, wobei sich dieses Kraftspeicherelement 4 einerseits am Stellhebel 7 und andererseits am Boden 12d der Zylinderhülse 12 abstützt. Ferner ist die Zylinderhülse 12 an ihrem freien, dem Fahrzeug-Innenraum 8 zugewandten Ende mit einem Hand-Drehgriff 14 versehen, an welchem ein Fahrzeuginsasse angreifen kann, um die Zylinderhülse 12 um ihre Achse 12c zu verdrehen.
Jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Windabweiser
- 1a: Unterseite von 1
- 2: Dachrahmen
- I,II,III: Positionen von 1
- α: Ausstellwinkel
- s: freier Weg von 7
- 3: Schwenkachse
- 4: Kraftspeicherelement (Schraubendruckfeder)
- 5: Dichtelement
- 6: bewegbares Dach
- 7: Stellhebel
- 7a: Bund
- 8: Fahrzeug-Innenraum
- 9: Pfeilrichtung: Ausstellbewegung von 1
- 10: Pfeilrichtung: Bewegung von 7 bei 9 sowie von 11 beim Verstellen
- 11: Anschlagelement
- 12: Zylinderhülse
- 12a: Gewindegang in 12b
- 12b: Innenwand von 12
- 12c: Zylinderhülsenachse
- 12d: Boden von 12
- 13: Trägerteil für 12, verbunden mit 2
- 14: Hand-Drehgriff

## Patentansprüche

1. Windabweiser für eine mittels eines bewegbaren Daches (6) abdeckbare Dachöffnung eines Fahrzeuges, insbesondere Personenkraftwagens, der am vorderen Dachrahmen (2) befestigt durch ein Halteelement in abgesenkter Schließstellung (Position I) gehalten und bei Entfernen des Halteelementes durch ein Kraftspeicherelement (4) in eine von einem Anschlagelement (11) begrenzte Ausstellposition (II,III) ausgeschwenkt wird,
dadurch gekennzeichnet, daß das Anschlagelement (11) durch einen Fahrzeuginsassen verstellbar ist, um den Windabweiser-Ausstellwinkel (α) individuell zu begrenzen.

2. Windabweiser nach Anspruch 1,
gekennzeichnet durch einen an der Unterseite (1a) des Windabweisers (1) gelenkig angebundenen Stellhebel (7), der mit Erreichen eines gewissen Windabweiser-Ausstellwinkels (α) am sich letztendlich an der Fahrzeug-Karosserie abstützenden verstellbaren Anschlagelement (11) anliegt.

3. Windabweiser nach Anspruch 1 oder 2,
dadurch gekennzeichnet, daß das verstellbare Anschlagelement (11) in einem Gewindegang (12a) geführt ist, der aus der Innenwand (12b) einer koaxial zum Stellhebel (7) angeordneten Zylinderhülse (12) herausgearbeitet ist.

4. Windabweiser nach einem der vorangegangenen Ansprüche,
dadurch gekennzeichnet, daß das verstellbare Anschlagelement (11) den Stellhebel (7) ringförmig umgibt und gegenüber diesem in Richtung der Zylinderhülsenachse (12c) längsverschiebbar, jedoch gegen Verdrehen gesichert ist, wobei das freie Ende des Stellhebels (7) einen Bund (7a) aufweist, der mit dem Anschlagelement (11) in Kontakt kommen kann.

5. Windabweiser nach einem der vorangegangenen Ansprüche,
dadurch gekennzeichnet, daß sich das als Schraubendruckfeder ausgebildete Kraftspeicherelement (4) einerseits am Stellhebel (7) und andererseits am Boden (12d) der Zylinderhülse (12) abstützt.

6. Windabweiser nach einem der vorangegangenen Ansprüche,
dadurch gekennzeichnet, daß die Schraubendruckfeder koaxial zur Zylinderhülse (12) sowie zum Stellhebel (7) innerhalb desselben geführt ist.

7. Windabweiser nach einem der vorangegangenen Ansprüche,
dadurch gekennzeichnet, daß die am Dachrahmen (2) der Fahrzeug-Karosserie oder an einem mit diesem verbundenen Trägerteil (13) um ihre Achse (12c) verdrehbar gelagerte Zylinderhülse (12) an ihrem freien Ende einen vom Fahrzeug-Innenraum (8) her zugänglichen Hand-Drehgriff (14) trägt.
